Europäisches Patentamt

European Patent Office

Office européen des brevets

(19)

(11) Veröffentlichungsnummer : **0 076 362**
**B1**

(12) **EUROPÄISCHE PATENTSCHRIFT**

(45) Veröffentlichungstag der Patentschrift :
05.03.86

(21) Anmeldenummer : 82105543.1

(22) Anmeldetag : 24.06.82

(51) Int. Cl.⁴ : **H 04 Q 11/04, H 04 B 9/00,**
**H 04 M 11/06, H 04 N 7/00**

(54) Dienstintegriertes Nachrichtenübertragungs- und Vermittlungsnetz für Bild, Ton und Daten.

(30) Priorität : 26.09.81 DE 3138473

(43) Veröffentlichungstag der Anmeldung :
13.04.83 Patentblatt 83/15

(45) Bekanntmachung des Hinweises auf die Patenterteilung : 05.03.86 Patentblatt 86/10

(84) Benannte Vertragsstaaten :
BE DE FR GB IT LU NL

(56) Entgegenhaltungen :
EP-A- 0 053 673
SECOND INTERNATIONAL CONFERENCE ON TELE-
COMMUNICATION/TRANSMISSION - INTO THE DIGI-
TAL ERA, 17.-20. März 1981, Seiten 217-220, IEE,
London, G.B. E.F. ANDERSEN et al.: "Optical digital
broadband networks of three generations"
SECOND INTERNATIONAL CONFERENCE ON TELE-
COMMUNICATION/TRANSMISSION - INTO THE DIGI-
TAL ERA
NTG-FACHBERICHTE ISSLS 80, Band 73, 1980, The
international symposium on subscriber loops and
services, 15.-19. September 1980, München, Seiten
46-50, VDE Verlag, Berlin, DE., M. WELZENBACH et
al.: "The application of optical systems for cable TV"
IEEE JOURNAL OF SOLID-STATE CIRCUITS, Band
14, Nr. 5, Oktober 1979, Seiten 829-832, W.
BRAECKELMANN et al.: "A masterslice LSI for subnanosecond random logic"
NACHRICHTENTECHNISCHE ZEITSCHRIFT, Band 33,
Heft 9, September 1980, Seiten 602-607, Berlin, DE.,
B. RALL et al.: "Bildfernsprechkoppelfeld mit integrierten Halbleiterkoppelpunkten"

(73) Patentinhaber : ANT Nachrichtentechnik GmbH
Gerberstrasse 33
D-7150 Backnang (DE)

(72) Erfinder : Schmack, Hans-Jürgen, Ing. grad.
Wunnensteinstrasse 3
D-7151 Allmersbach i.T. (DE)
Erfinder : Czansky, Wilhelm, Ing. grad.
Strümpfelbacher Weg 51
D-7150 Backnang (DE)
Erfinder : Schmidt, Wolfgang, Dr., Dr.-Ing.
Beinsteiner Strasse 59
D-7056 Weinstadt (DE)

(74) Vertreter : Schickle, Gerhard, Dipl.-Ing. et al
ANT Nachrichtentechnik GmbH Patent- und Lizenzabteilung Gerberstrasse 33
D-7150 Backnang (DE)

## Beschreibung

Die Erfindung betrifft ein breitbandintegriertes Glasfaserortsnetz zur Versorgung von Teilnehmern gemäß Oberbegriff des Anspruchs 1.

Ein solches dienstintegriertes Nachrichtenübertragungs- und Vermittlungssystem ist durch die DE-OS 29 22 418 bekannt geworden, bei dem in der Zentrale ein Video- und ein Audio-Koppelfeld zur Versorgung des Teilnehmers mit zwei TV- und 10 UKW-Programmen, die durch den Teilnehmer mittels eines Steuersignals in der Rückrichtung aus der angebotenen Vielzahl von Fernseh- und Rundfunkprogrammen ausgewählt werden können.

Ein solches Video- oder Audio-Koppelfeld erfordert eine umständliche und aufwendige Leitungsführung in der Zentrale, die umso größer ist, je mehr Programme dem einzelnen Teilnehmer gleichzeitig angeboten werden. Gegenwärtige Planungen gehen von drei Fernsehprogrammen aus 16 angebotenen und von einer Verteilung der Signale auf unterschiedliche Teilnehmeranzahlen bis zur Größe eines Fernmeldeortsnetzbereichs aus. Es ist einzusehen, daß zwischen Koppelfeld und Teilnehmermultiplexer zur Entkopplung bzw. Entstörung der Verbindungs- und Steuerleitungen ein hoher Aufwand, z. B. in Koaxialtechnik, erforderlich ist.

Durch den Aufsatz von Andersen et al « Optical digital broadband networks of three generations » in 2nd INTERNATIONAL CONFERENCE ON TELECOMMUNICATION, 17.-20. März, London, Seiten 217-220 ist ein breitbandintegriertes Glasfaserortsnetz der eingangs genannten Art bekanntgeworden, bei dem zur Programmselektion und zur 4-Kanal-Multiplexbildung für jeden Teilnehmeranschluß ein schneller 16xl-Kanalmultiplexer verwendet wird, wobei die Kanaladressen entsprechend der ausgewählten Kanäle geschiftet werden. Nachteilig ist, daß dieser Multiplexer teuer ist und aufgrund seiner Schnelligkeit verhältnismäßig viel Strom braucht.

Der Erfindung lag die Aufgabe zugrunde, ein Glasfasernetz der eingangs genannten Art anzugeben, bei dem die Programmselektion und Kanalmultiplexbildung weniger Aufwand erfordert und den Einsatz stromsparender Bauelemente und Schaltungen ermöglicht.

Die Lösung dieser Aufgabe erfolgt durch die im Patentanspruch 1 gekennzeichneten Mittel.

Durch die erfindungsgemäße Aufteilung eines zentralen Koppelfeldes in jeweils einem Teilnehmer zugeordnete dezentrale Koppeleinrichtungen und durch die Zuführung der zu verteilenden Breitbandsignale über Bus-Leitungen werden sehr viele Leitungen eingespart. Die Erfordernisse an die dezentrale Koppeleinrichtung sind nicht hoch, es können hierfür einfache und damit billige Koppelpunkte eingesetzt werden. Für die Kanal-Multiplexbildung können langsame Multiplexer und damit ebenfalls billige Schaltungen verwendet werden.

Koppelpunkte, beispielsweise mit MOS-FET-Elementen, und Multiplexer haben den Vorteil der Stromeinsparung.

In einer Weiterbildung der Erfindung sind alle teilnehmerindividuellen Einrichtungen zusammengefaßt, wobei optoelektronische Umsetzer, die BB- und SB-Multiplexer, die Vermittlungsfunktionen und die dazugehörigen Steuerungen in einheitlichen Einschubkassetten untergebracht werden können. Durch diese Zusammenfassung ist es möglich, die Teilnehmeranschalteeinheit in Hochintegrationstechnik, z. B. mittels Gatterreihen auf kundenspezifischen Schaltkreischips herzustellen.

In einer weiteren Ausgestaltung der Erfindung ist es durch Kaskadierung von Selektorschaltern möglich, die Anzahl der angebotenen Fernsehprogramme oder anderer Breitbanddienste beliebig zu erweitern.

In einer weiteren Ausgestaltung der Erfindung enthält jede Teilnehmeranschalteeinheit eine Überwachungsschaltung, mit der es möglich ist, aufgrund eines von der Teilnehmerstelleneinrichtung abgegebenen Kennzeichens, das die Passivität des Teilnehmers kennzeichnet, die nicht benötigten Teile der Teilnehmeranschalteeinheit abzuschalten und damit noch mehr Strom einzusparen.

In einer anderen Ausgestaltung der Erfindung werden die Bus-Leitungen für die zu verteilenden Breitbandsignale nicht als Koaxialkabel ausgeführt, sondern als Mikrostrip-Leitungen im Zuge der Wannenverdrahtung, beispielsweise als Multilayer. Anstelle von Koaxsteckern können selbstverständlich billige Vielfachstecker verwendet werden.

Im übrigen weist der erfindungsgemäße Aufbau den Vorteil der einfachen Servitierbarkeit, einer guten Fehlerortungsmöglichkeit, minimaler Fehlerwirkungsbreite und einer leichten Erweiterbarkeit der Teilnehmeranzahl auf.

Es folgt nun die Beschreibung der Erfindung anhand der Ausführungsbeispiele darstellenden Figuren.

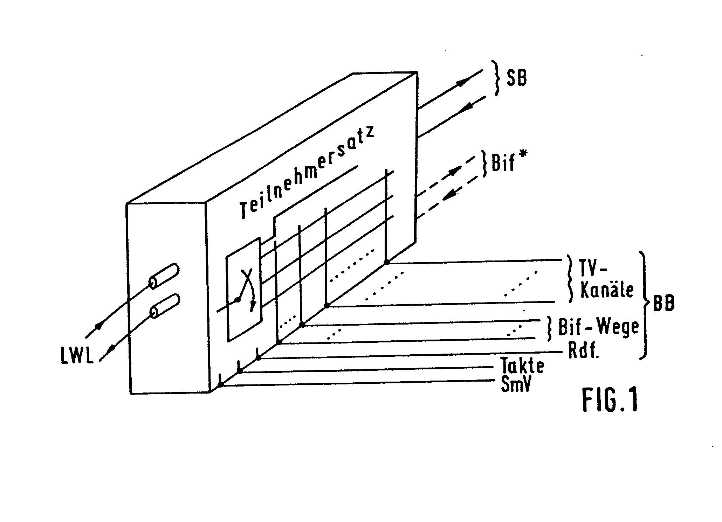

Die Fig. 1 zeigt in einer Ausgestaltung der Erfindung eine perspektivisch dargestellte Einschubkassette, die als Teilnehmersatz alle teilnehmerindividuellen Einrichtungen mit Breitband- und Schmalband-Multiplexern, mit Vermittlungsfunktionen und zugehöriger Steuerung sowie die elektrooptischen Umsetzer enthält. Die waagrecht verlaufenden Bus-Leitungen führen die Breitbandsignale wie TV-Kanäle, Bildfernsprechwege, Rundfunk sowie Takte und Stromversorgung. An der linken vorderen Querseite ist der Lichtwellenleiteranschluß LWL erkennbar, der zum Teilnehmer führt. An der hinteren Querseite sind die zu vermittelnden Schmalbandsignale SB (Telegrafie, Telefonie usw.) sowie unter Umständen eine Bildfernsprechleitung Bif* anschließbar, die zentral vermittelt ist.

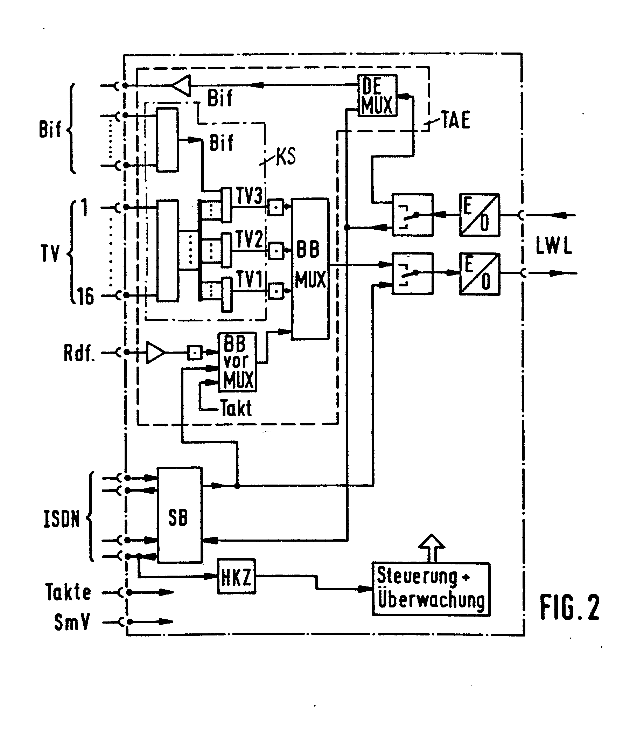

Die Fig. 2 enthält das Blockschaltbild zum Teilnehmersatz nach Fig. 1 (strichpunktiert). Linksseitig sind die Breitband-Bus-Eingänge erkennbar mit Bif, TV und Rundfunk, wobei aus den Bif- und TV-Signalen drei TV-Signale oder zwei TV-Signale und Bif auswählbar sind, die zusammen mit dem Rundfunksignal, zu dem die Schmalbandsignale (ISDN) in einem Breitbandvormultiplexer BB-VOR-MUX zugefügt werden, in einem Breitbandmultiplexer BBMUX zusammengefaßt und über einen Umschalter auf einen elektro-optischen Wandler gegeben werden, der die Glasfaserleitung LWL zum Teilnehmer hin speist. In der Rückrichtung werden die vom Teilnehmer ankommenden Signale mittels optoelektronischem Wandler in elektrische Signale umgesetzt und über einen Umschalter einem Demultiplexer D-MUX zugeführt, der die Schmalbandsignale ISDN und gegebenenfalls Bildfernsprechsignale Bif abgibt. Die vor der Multiplexzusammenfassung erforderliche Phasenanpassung der Signale erfolgt durch Mehrfachabtastung (punktisiertes Karo).

Der durch die strichlierte Umrandung gekennzeichnete Komplex entspricht der Teilnehmeranschalteeinheit TAE, deren Funktionen erfindungsgemäß auf einem hochintegrierten Chip zusammengefaßt werden. Selbstverständlich lassen sich die Funktionen auch mit standardintegrierten Schaltkreisen und gegebenenfalls Breitbandkoppelpunkten realisieren.

Ferner ist erkennbar, wie aus einem Schmalbandrückkanal die Kennzeichen der Teilnehmerstelleneinrichtung erkannt (HKZ) und einer Steuerungs- und Überwachungsschaltung entsprechende Befehle zugeführt werden, mit deren Hilfe die vom Teilnehmer nicht benötigten Schaltungsteile des Teilnehmersatzes abgeschaltet werden oder bei einem ein Fernsehprogramm auswählenden Teilnehmer das entsprechende Auswahladressenzeichen festgestellt und den entsprechenden Selektoren bzw. Decodern zugeführt wird.

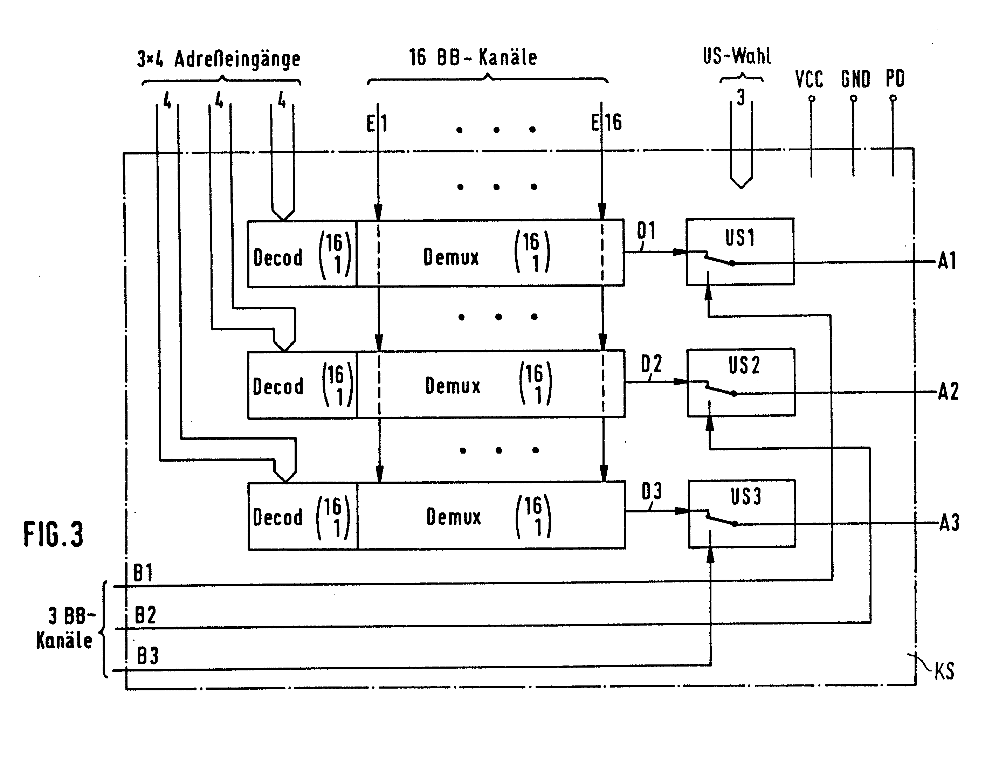

In Fig. 3 ist eine Koppeleinrichtung, wie sie nach der Erfindung in der Teilnehmeranschalteeinheit TAE verwendet werden kann, hier mit Kanalselektor KS bezeichnet, als Blockschaltbild dargestellt. Dieser Kanalselektor enthält drei gleichartige Einrichtungen, die jeweils aus einem ($16_1$)-Decoder, ($16_1$)-Demultiplexer und Umschaltern US bestehen. Auf die drei Demultiplexer ($16_1$) werden die 16 Breitbandkanäle E1 bis E16 mit binären, digitalen Signalen (z. B. ECL-Schnittstelle, je ca. 70 Megabit/sec) geführt. Mit Hilfe von 3 mal 4 Adresseneingängen und entsprechenden Decodern wird jeweils ein Breitbandkanal auf einen der Ausgänge D1 bis D3 geschaltet. Mit Hilfe der Umschalter US1 bis US3 werden wahlweise die Signale D1 bis D3 oder die Signale B1 bis B3 an die Ausgänge A1 bis A3 des Kanalselektors durchgeschaltet.

Mit Hilfe dieser Umschalter ist eine Kaskadierung der Kanalselektoren, wobei die 3 BB-Kanaleingänge B1 bis B3 des einen Kanalselektors mit den 3 Ausgängen A1 bis A3 eines anderen Kanalselektors usw. verbunden werden, und damit eine beliebige Erweiterung der Anzahl der angebotenen Fersehprogramme oder anderer Breitbanddienste möglich. Die 3 BB-Kanaleingänge B1 bis B3 des letzten Kanalselektors bleiben Bildfernsprechen vorbehalten. Zur Umschalterauswahl sind 3 Bit vorgesehen. Die Änderungen der Adressen erfolgen sehr langsam, etwa im Sekundenbereich, so daß die Adressleitung als Schirm- oder Koppelleitungen zwischen den Breitbandkanalleitungen geführt werden können. Über die Anschlüsse VCC wird der Kanalselektor mit Strom versorgt, über den Anschluß PD ist der Kanalselektor von der Stromversorgung abschaltbar.

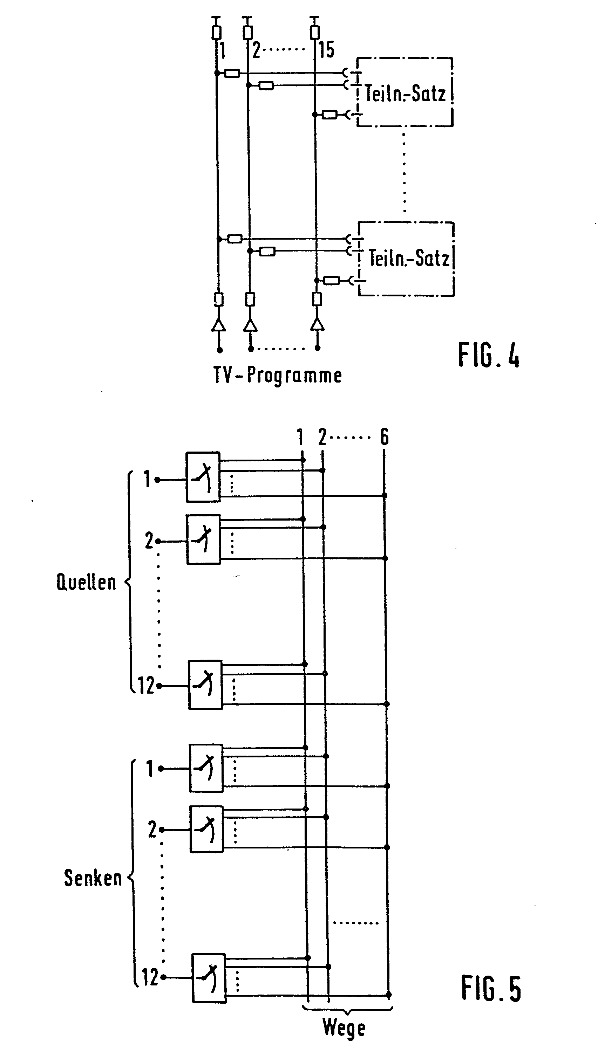

Die Fig. 4 zeigt einen Breitband-Bus, wobei die TV-Programmschienen am Anfang und am Ende annähernd mit ihrem Wellenwiderstand abgeschlossen sind. Die Abgriffe zu den Teilnehmersätzen sind hochohmig, die Widerstände sitzen auf der Wannenverdrahtungsplatte, so daß von den Steckverbindungen verursachte Reflexionen keine Auswirkungen haben. Die am Buseingang gezeichneten Verstärker sind beispielsweise ECL-Treiber, die für jede Wanne einmal erforderlich sind.

Die Figur 5 stellt eine für dezentrale Strukturen geeignete Schaltung zur dezentralen Bildfernsprechvermittlung für 12 Teilnehmer und 6 Wege da, wobei externe Verbindungen, die mittels Leitungssätzen oder Konferenzschaltungssätzen an die Bif-Wege anschließbar sind, nicht dargestellt sind.

## Patentansprüche

1. Breitbandintegriertes Glasfaserortsnetz zur Versorgung von Teilnehmern mit Breitband (BB)- und Schmalband (SB)-diensten, wobei in der Zentrale mittels Koppeleinrichtungen aus den digitalen BB- und SB-Signalen eine beschränkte Anzahl von Signalen ausgewählt, mittels Multiplexer zusammengefaßt und nach elektro-optischer Umsetzung über Glasfaserteilnehmerleitungen übertragen wird, wobei in der Zentrale den Teilnehmern zugeordnete Teilnehmeranschalteeinheiten (TAE) vorgesehen sind, denen die BB-Signale über Bus-Leitungen zugeführt werden, dadurch gekennzeichnet, daß in den Teilnehmeranschalteeinheiten (TAE) jeweils eine Koppeleinrichtung (KS) mit Koppelpunkten zur Anschaltung der teilnehmerseitig ausgewählten BB-Signale an die zugeordnete Teilnehmerleitung (LWL) vorgesehen ist und daß die so selektierten BB-Signale zusammen mit den mittels eines Vormultiplexers (VorMux) zusammengefaßten Schmalbandsignalen durch einen Multiplexer (MUX) zusammengefaßt werden (Figur 2).

2. Ortsnetz nach Anspruch 1, dadurch gekennzeichnet, daß die Teilnehmeranschalteeinheit (TAE) den Multiplexer (MUX) mit einschließt und daß die Koppelpunkte in den Multiplexer integriert werden.

3. Ortsnetz nach Anspruch 1 oder 2, gekennzeichnet durch die Realisierung in hochintegrierter Technik, z. B. mit « gate arrays » bzw. kundenspezifischen Schaltkreisen.

4. Ortsnetz nach einem der vorhergehenden Ansprüche, dadurch gekennzeichnet, daß die BB-Signale TV-Signale sind, wobei bezahltes Fernsehen (Pay-TV) und Bildfernsprechen (Bif) gegebenenfalls mit Priorität gegenüber den TV-Signalen anschaltbar sind.

5. Ortsnetz nach einem der vorhergehenden Ansprüche, dadurch gekennzeichnet, daß das Koppelfeld (KS) aus parallel- und/oder hintereinandergeschalteten Selektorschaltern $(^m{}_n)$ besteht, insbesondere aus $(^{16}{}_1)$-Demultiplexern mit Decodern (Figur 3).

6. Ortsnetz nach einem der vorhergehenden Ansprüche, dadurch gekennzeichnet, daß die Teilnehmeranschalte-einheit eine Überwachungsschaltung enthält, durch welche die Stromversorgung der nicht benötigten Teile der Teilnehmeranschalteeinheit ganz oder teilweise abgeschaltet wird, so daß der Energieverbrauch entsprechend des jeweiligen Betriebszustandes minimiert wird.

7. Ortsnetz nach Anspruch 5, dadurch gekennzeichnet, daß die Bus-Leitungen Microstrip-Leitungen sind, die dadurch räumlich voneinander entkoppelt sind, daß zwischen ihnen andere Leitungen, z. B. Adressen-Microstrip-Leitungen zur Einstellung der Decoder, geführt werden.

8. Ortsnetz nach einem der vorhergehenden Ansprüche, dadurch gekennzeichnet, daß die Signale auf den Bus-Leitungen am Busanfang synchronisiert werden, indem jeweils mit der doppelten Bittaktfrequenz abgetastet und bei Erkennung eines Flankenwechsels der vorletzte Abtastwert übertragen wird (Phasensynchronisation durch Mehrfachabtastung).

9. Ortsnetz nach einem der Ansprüche 1 bis 7, dadurch gekennzeichnet, daß in den Teilnehmeranschalteeinheiten (TAE) die ausgewählten BB-Signale in der Phasenlage synchronisiert werden, indem jeweils mit der doppelten Bittaktfrequenz abgetastet und bei Erkennung eines Flankenwechsels der vorletzte Abtastwert übertragen wird (Phasensynchronisation durch Mehrfachabtastung).

10. Ortsnetz nach Anspruch 2, dadurch gekennzeichnet, daß die Teilnehmeranschalteeinheiten zusätzlich diejenigen Einrichtungen enthalten, die zur Multiplexbildung der Schmalband- und der internen Steuersignale erforderlich sind, damit die so gebildeten Multiplexsignale über vorzugsweise serielle Bussysteme weitergeleitet werden können.

## Claims

1. Wide-band-integrated glass fibre local telephone network for the supply of subscribers with wide band (BB) services and narrow band (SB) services, wherein a restricted number of signals is selected from the digital wide band signals and narrow band signals by means of coupling equipments in the exchange, combined by means of multiplexers and after electro-optical conversion transmitted by way of glass fibre subscriber lines, wherein subscriber connecting units (TAE), which are associated with the subscribers and to which the wide band signals are conducted by way of bus lines, are provided in the exchange, characterised thereby, that a respective coupling equipment (KS) with coupling points for the connection of the wide band signals, which are selected at the subscriber end, to the associated subscriber line (LWL) is provided in each of the subscriber connecting units (TAE) and that the thus selected wide band signals together with the narrow band signals, which are combined by means of a preliminary multiplexer (VorMux), are combined by a multiplexer (MUX) (Fig. 2).

2. Local telephone network according to claim 1, characterised thereby, that the subscriber connecting unit (TAE) also includes the multiplexer (MUX) and that the coupling points are integrated into the multiplexer.

3. Local telephone network according to claim 1 or 2, characterised by the realisation in highly integrated technique, for example with gate arrays or switching circuits specific to customers.

4. Local telephone network according to one of the preceding claims, characterised thereby, that the wide band signals are television signals, wherein paid television (Pay-TV) and video-telephony (Bif) are in a given case connectable with priority over the television signals.

5. Local telephone network according to one of the preceding claims, characterised thereby, that the coupling field (KS) consists of selector switches $(^m{}_n)$, which are connected in parallel and/or one behing the other, particularly of $(^{16}{}_1)$ demultiplexers with decoders (Fig. 3).

6. Local telephone network according to one of the preceding claims, characterised thereby, that the subscriber connecting unit contains a monitoring circuit, through which the current supply of the not required parts of the subscriber connecting unit is switched off entirely or partially so that the energy consumption is minimised in accordance with the respective operating state.

7. Local telephone network according to claim 5, characterised thereby, that the bus lines are microstrip lines which are spatially decoupled one from the other thereby, that other lines, for example address microstrip lines for the setting of the decoders, are conducted between them.

8. Local telephone network according to one of the preceding claims, characterised thereby, that the signals on the bus lines are synchronised at the beginning of the bus in that scanning is done each time at twice the bit rate frequency and the penultimate scan value is transmitted on recognition of a pulse edge change (phase synchronisation through multiple scanning).

9. Local telephone network according to one of the claims 1 to 7, characterised thereby, that the selected wide band signals are synchronised in the phase position in the subscriber connecting units (TAE) in that scanning is done each time at twice the bit rate frequency and the penultimate scan value is transmitted on recognition of a pulse edge change (phase synchronisation through multiple scanning).

10. Local telephone network according to claim 2, characterised thereby, that the subscriber connecting units additionally contain those equipments which are necessary for the multiplex formation of the narrow band signals and the internal control signals so that the thus formed multiplex signals can be passed on by way of preferably serial bus systems.

## Revendications

1. Réseau optique local à large bande et intégration de services pour l'alimentation d'abonnés en services à large bande (BB) et à bande étroite (SB), dans lequel des signaux en nombre limité sont sélectés parmi les signaux numériques BB et SB, par des équipements de couplage dans le central, réunis par des multiplexeurs puis transmis par des lignes optiques d'abonné après conversion électro-optique, le central comportant des unités de raccordement d'abonné (TAE) affectées aux abonnés et auxquelles des lignes de bus appliquent les signaux BB, ledit réseau étant caractérisé en ce que chaque unité de raccordement d'abonné (TAE) comprend un équipement de couplage (KS) avec des points de couplage pour la connexion à la ligne d'abonné correspondante (LWL) des signaux BB sélectés par l'abonné ; et les signaux BB ainsi sélectés sont réunis par un multiplexeur (MUX) avec les signaux à bande étroite réunis par un prémultiplexeur (VOR-MUX) (figure 2).

2. Réseau local selon revendication 1, caractérisé en ce que l'unité de raccordement d'abonné (TAE) comprend le multiplexeur (MUX) ; et les points de couplage sont intégrés au multiplexeur.

3. Réseau local selon une des revendications 1 ou 2, caractérisé par sa réalisation en technique à haut degré d'intégration, par exemple avec des rangées d'opérateurs ou des circuits intégrés spécifiques de l'utilisateur.

4. Réseau local selon une quelconque des revendications 1 à 3, caractérisé en ce que les signaux BB sont des signaux de TV, la télévision payante (Pay-TV) et la visiophonie (Bif) étant le cas échéant connectables en priorité sur les signaux de TV.

5. Réseau local selon une quelconque des revendications 1 à 4, caractérisé en ce que le panneau de couplage (KS) est constitué par des sélecteurs ($^m_n$) couplés en parallèle et/ou en série, et en particulier par des démultiplexeurs ($^{16}_1$) avec des décodeurs (figure 3).

6. Réseau local selon une quelconque des revendications 1 à 5, caractérisé en ce que l'unité de raccordement d'abonné comprend un circuit de surveillance qui coupe totalement ou partiellement l'alimentation des éléments inutilisés de l'unité de raccordement d'abonné, de sorte que la consommation d'énergie est minimisée selon l'état de fonctionnement instantané.

7. Réseau local selon revendication 5, caractérisé en ce que les lignes de bus sont des lignes à ruban dont le découplage spatial est assuré par la pose entre elles d'autres lignes telles que des lignes à ruban d'adresse pour le réglage des décodeurs.

8. Réseau local selon une quelconque des revendications 1 à 7, caractérisé en ce que les signaux sont synchronisés sur les lignes de bus, au début du bus, par échantillonnage au double de la fréquence d'horloge de bit puis transmission de l'avant-dernière valeur échantillonnée lors de l'identification d'un changement de front (synchronisation de phase par échantillonnage multiple).

9. Réseau local selon une quelconque des revendications 1 à 7, caractérisé en ce que la phase des signaux BB sélectés est synchronisée dans les unités de raccordement d'abonné (TAE) par échantillonnage au double de la fréquence d'horloge de bit, puis transmission de l'avant-dernière valeur échantillonnée lors de l'identification d'un changement de front (synchronisation de phase par échantillonnage multiple).

10. Réseau local selon revendication 2, caractérisé en ce que les unités de raccordement d'abonné comportent en outre les équipements nécessaires au multiplexage des signaux à bande étroite et des signaux de commande internes, de sorte que les signaux ainsi multiplexés peuvent avantageusement être transmis par des systèmes de bus sériels.

FIG.1

FIG. 2

FIG.3

3×4 Adreßeingänge

16 BB- Kanäle

US-Wahl

VCC GND PD

E 1 · · · · E 16

Decod $\binom{16}{1}$  Demux $\binom{16}{1}$  D1  US1  —— A1

Decod $\binom{16}{1}$  Demux $\binom{16}{1}$  D2  US2  —— A2

Decod $\binom{16}{1}$  Demux $\binom{16}{1}$  D3  US3  —— A3

3 BB-Kanäle

B1
B2
B3

KS

0 076 362

**0 076 362**

FIG. 4

TV-Programme

FIG. 5

Quellen

Senken

Wege

4